Europäisches Patentamt

European Patent Office

Office européen des brevets

(11) Publication number: **0 217 988**
**A1**

# EUROPEAN PATENT APPLICATION

(21) Application number: **85306611.6**

(22) Date of filing: **17.09.85**

(51) Int. Cl.⁴: **F16K 11/087**

(43) Date of publication of application:
**15.04.87 Bulletin 87/16**

(84) Designated Contracting States:
**AT BE CH DE FR GB IT LI LU NL SE**

(71) Applicant: **Yang, Tai-Her**
**5-1 Taipin Street**
**Si-Hu Town Dzan-Hwa(TW)**

(72) Inventor: **Yang, Tai-Her**
**5-1 Taipin Street**
**Si-Hu Town Dzan-Hwa(TW)**

(74) Representative: **Arthur, Bryan Edward et al**
**Withers & Rogers 4 Dyer's Buildings Holborn**
**London EC1N 2JT(GB)**

(54) **Single-handle type tap for volume/temperature regulation of water.**

(57) This invention relates to a water faucet having a single handle 201 for controlling both the volume and the temperature of the water dispensed. The faucet includes a substantially spherical socket a valve body 103 angularly displaceable within the body 103 according to movement of the handle 201, at least two inlets 100 for delivering water of different temperatures into the socket, a mixing chamber formed in the valve body 103 for receiving water from inlets and sealing means 102, 102" between the valve body 103 and the respective inlets 100.

Fig. 1

EP 0 217 988 A1

**1. TITLE OF THE INVENTION: An Improved Design of the Single-handle Type of Water Faucet for Volume/Temperature Regulation**

2. BACKGROUND OF THE INVENTION:

This improvement case mainly uses various auxiliary leakage-proof designs to further enhance the functions of the said water faucet and also discloses the designs of various water guide channels in the spheric plug to match the above-said leakage-proof designs and presents the ways of the structure to limit the lotary movements.

3. SUMMARY OF THE INVENTION:

This patent application case is that under the principle that the surface of the sphere is provided with a water guide channel to couple the water inlets/outlets, which shall remain unchanged, a tubular water-proof plug structure is added thereon and that further examples of the water guide channel designs in other various geometric forms and the improved designs of the rotary movement-limiting device are provided.

4. BRIEF DESCRIPTION OF THE DRAWINGS:

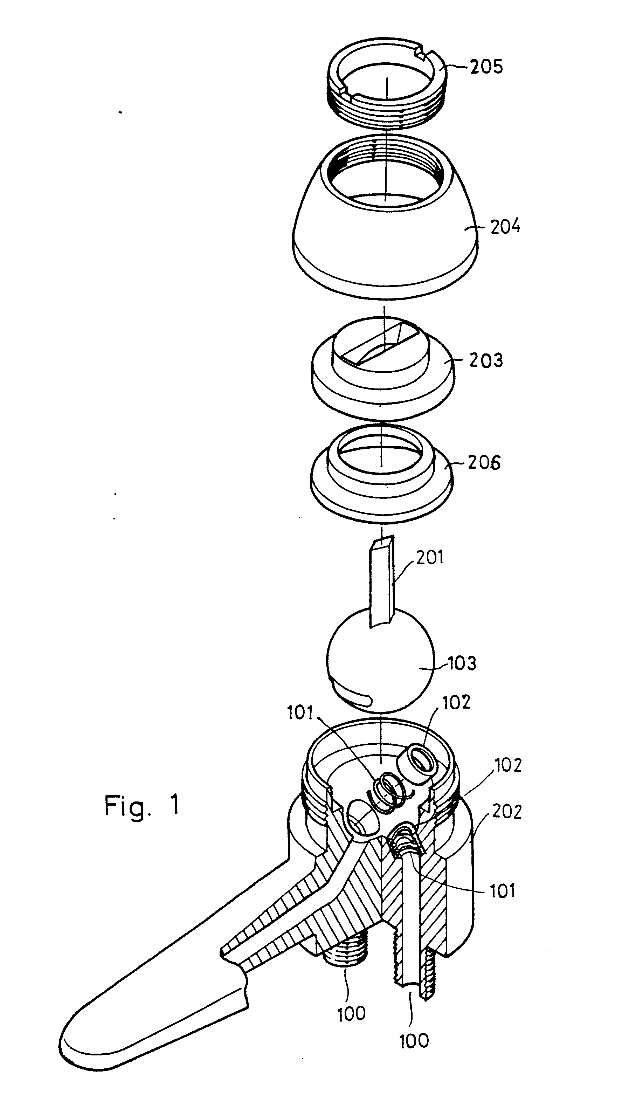

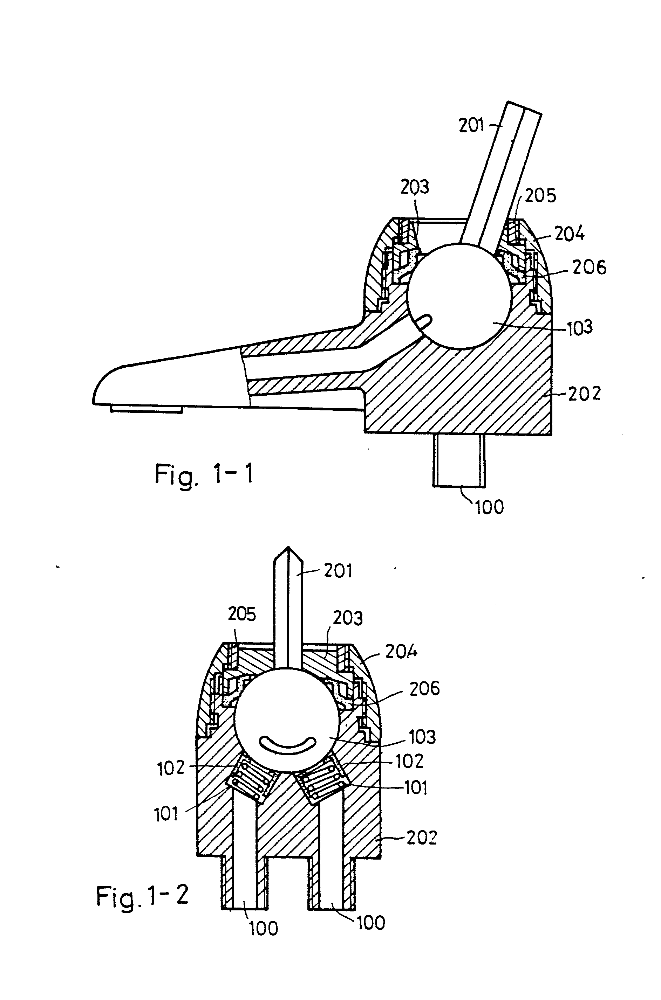

Fig. 1 is a view of an examplary embodiment of the water faucet for volume/temperature regulation, which has the tubular leakage-proof plug and its sphere having a water guide channel.

FIG. 1-1 is a cross section A of Fig. 1.

FIG. 1-2 is a cross section B of Fig. 1.

FIG. 2 is a conventional separate tubular plug.

FIG. 3 is an integral-type tubular plug.

FIG. 4 is a view of an examplary embodiment of the sphere having an arcuate water guide channel.

FIG. 4-1 is a view of an examplary embodiment of the sphere having a sequare water guide channel.

FIG. 4-2 is a view of an examplary embodiment of the sphere having a rectangular water guide channel.

FIG. 4-3 is a view of an examplary embodiment of the sphere having a round water guide channel.

FIG. 4-4 is a view of an examplary embodiment of the sphere having a trapezoidal water guide channel.

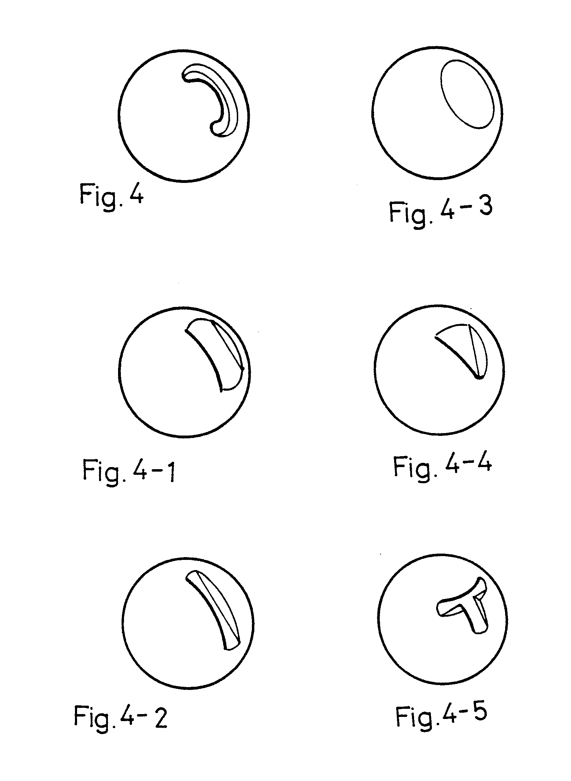

FIG. 4-5 is a view of an examplary embodiment of the sphere having a T-shaped water guide channel.

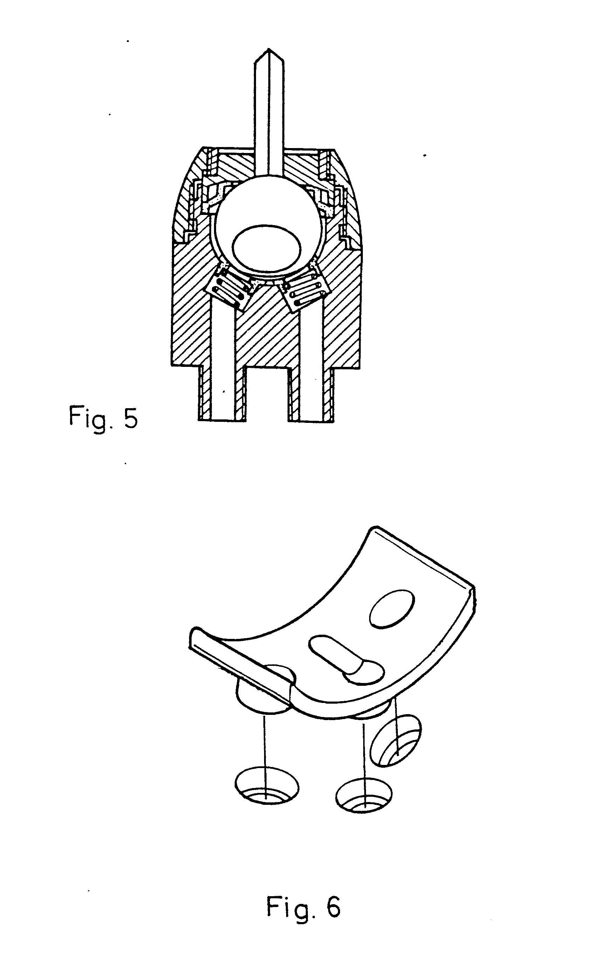

FIG. 5 is a cross sectional view of the gap formed by the tubular plug and between the spheric body and the spheric soket seat.

FIG. 6 is a view of the examplary embodiment of the integrally connected tubular plug having a flow guide channedl.

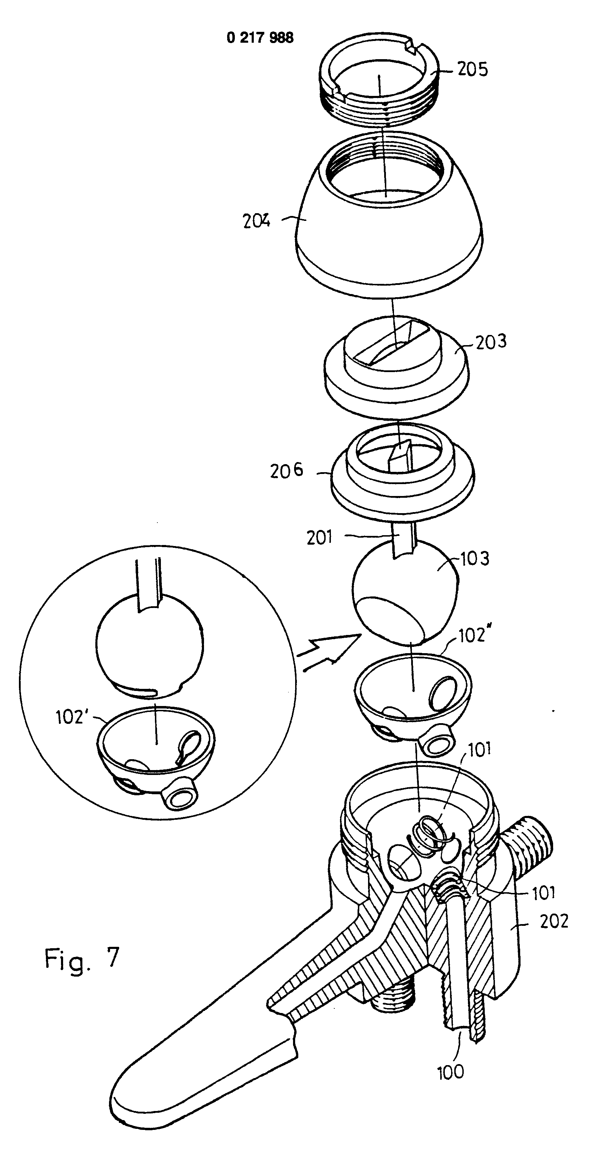

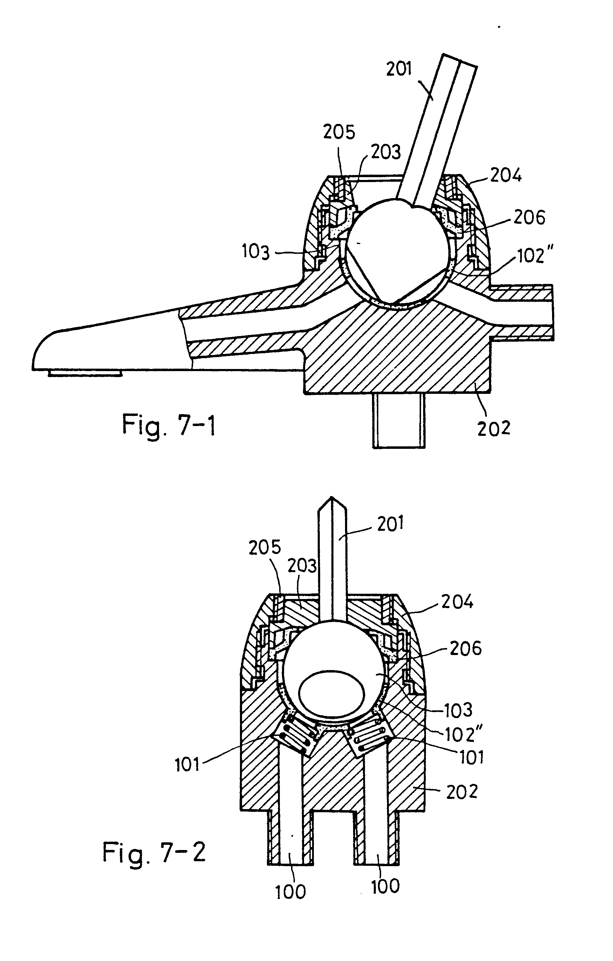

FIG. 7 is a view of the applicable example of the integrally connected tubular plug having two separate flow guide channels to be applied to the volume/temperature regulation and to the operating and controlling of the two water outlets.

FIG. 7-1 is the cross section A of FIG. 7.

FIG. 7-2 is the cross section B of FIG. 7.

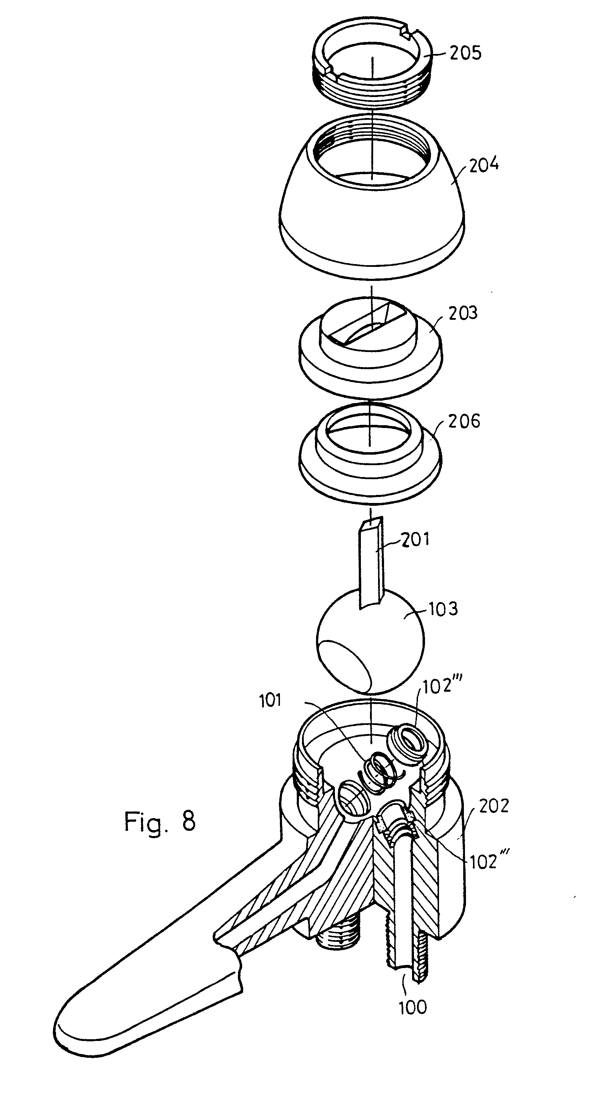

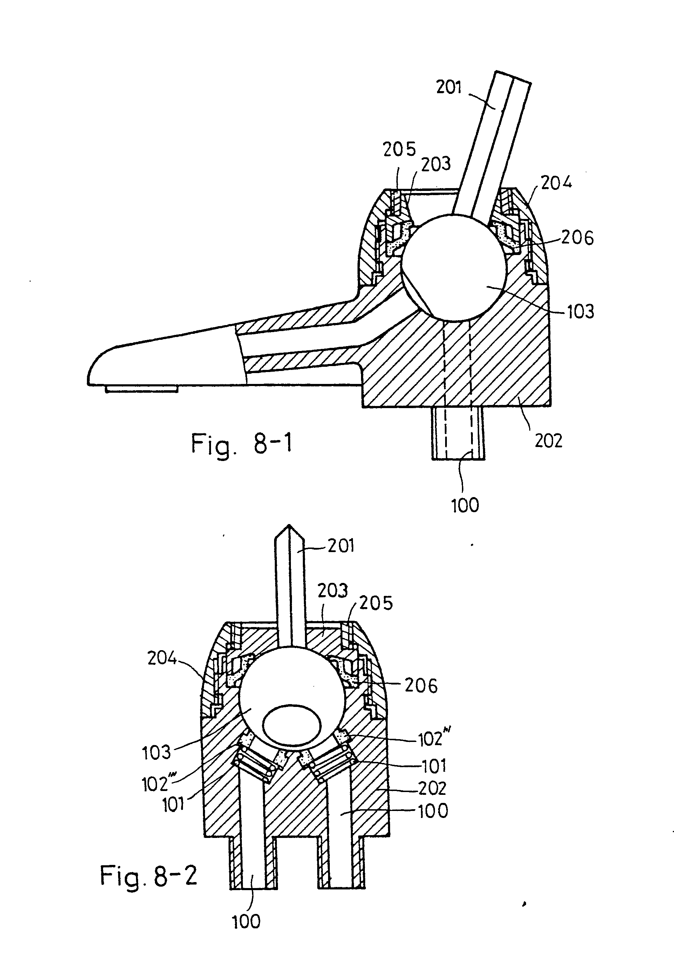

FIG. 8 is a view of the applicable example of the water faucet having the position-limiting tubular plug and the sphere with the flat smooth water guide channel for the volume/temperature regulation.

FIG. 8-1 is a cross section A of FIG. 8.

FIG. 8-2 is a cross section B of FIG. 8.

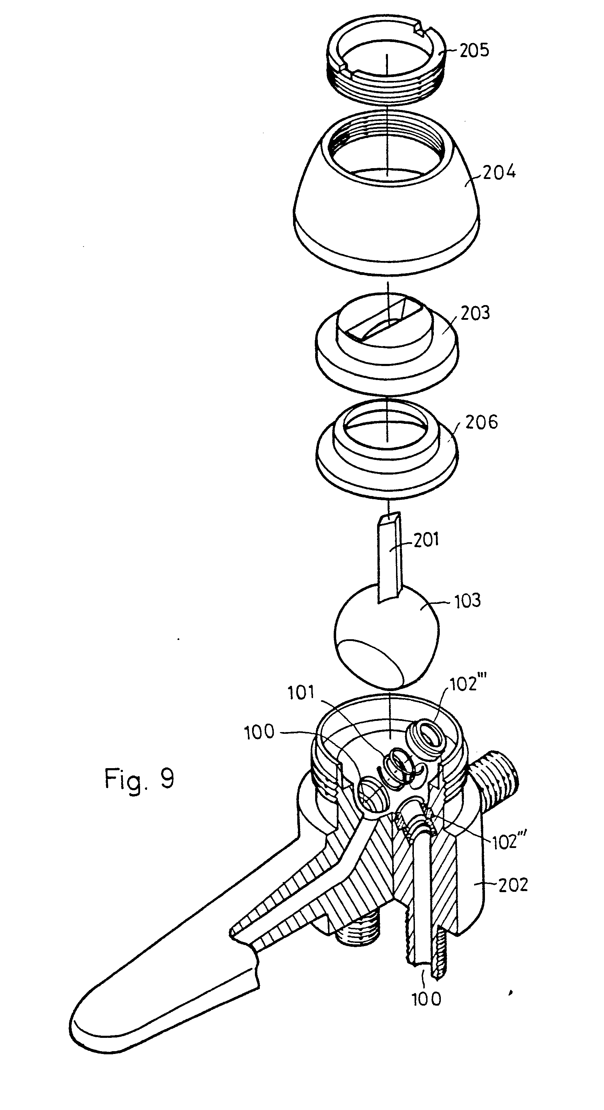

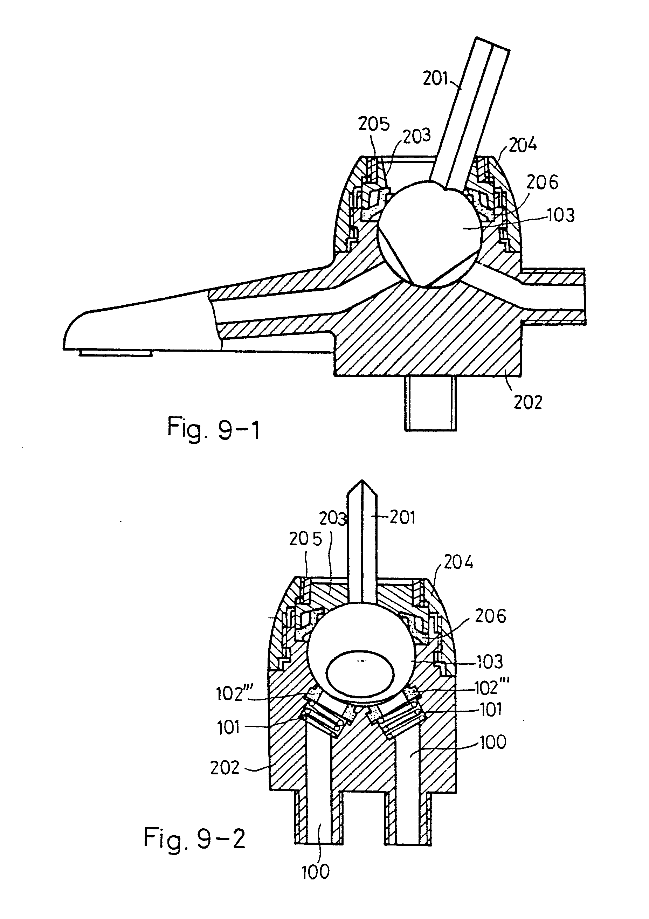

FIG. 9 is a view of the applicable example of the water faucet having a position-limiting tubular plug and the sphere with the flat smooth water guide channel for the volume/temperature regulation and the operating and controlling of the two water outlets.

FIG. 9-1 is a cross section A of FIG. 9.

FIG. 9-2 is a cross section B of FIG. 9.

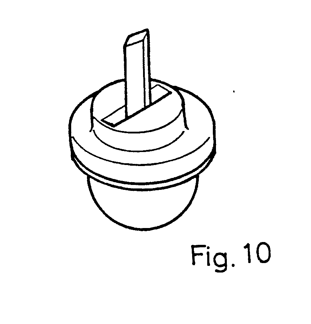

FIG. 10 is a view of the positive and reverse angular movement-limiting structure.

Descriptions on the Part Numbers:

100 -Water inlet
101 -Oil spring
102 -Tubular plug
102' -Mutually connected tubular plug having two separate flow guide channel structure.
102" -Mutually connected tubular plug having the separate flow guide hole structure.
102''' -Position-limiting tubular plug
103 -Sphere
201 -Handle bar
202 -Valve body
203 -Valve over
204 -Annular valve shell
205 -Fixed helical ring
206 -Protective cover

## 5. DETAILED DESCRIPTION OF THE INVENTION:

For the original conventional sphere-type water faucets, mainly the water guide channel formed by the notch in the sphere couples the water inlets/outlets to regulate the water supply volume of the water faucet and the hot and cold water mixing ratio between, and the annularring is used to achieve its auxiliary water leakage-proof purpose, this case also further presents the examples of the designs of the water guide channels in various forms and provides another leakage-proof way, i.e. the tubular water-proof plug (made of a flexible material such as rubber, plastic or soft metal) and a spring which are then placed into the hot and cold water inlets, and a rod-type stock slightly, in a diamond shape is used to limit its rotary movement scope.

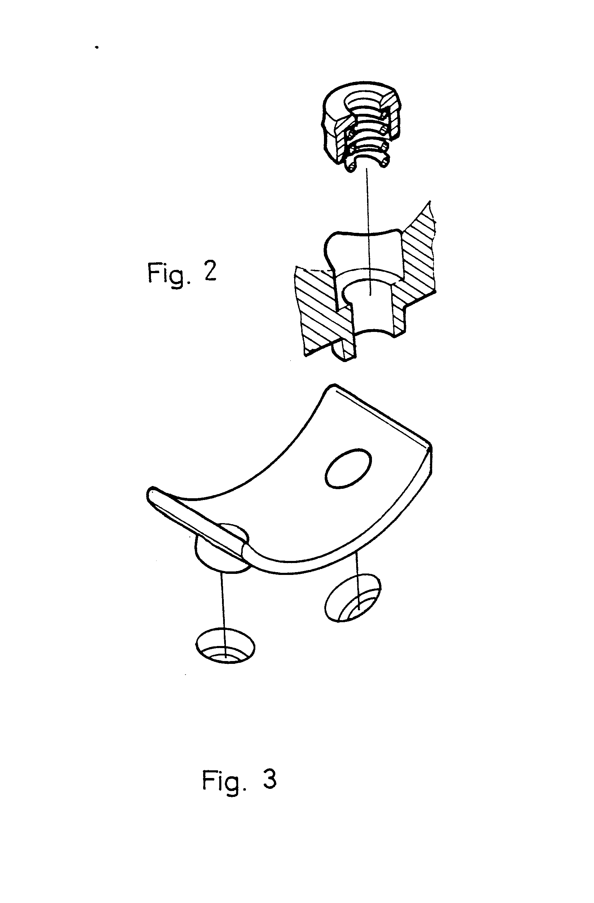

Its applicable examples are shown in FIGS. 1, 1-1 and 1-2. In FIG. 1, 201 is a handle bar, 202 is a valve body, 203 is a valve cover, 204 is an annular valve shell, 205 is a fixed helical ring, 206 is a protective cover, the water inlet 100 is in a lopsided (larger in the outer part and smaller in the inner part) terrace type to receive the coil spring 101 and the tubular plug 102 to be inserted therein, the tubular plug 102 maybe made of a plastic or other soft metal material, the elastic force of the said spring compresses the tubular plug tightly sticking on the surface of the sphere 103 and also coupling the water guide channel X in the said sphere, the construction of the said tubular plug maybe the conventional separate plugs (as shown in FIG. 2) or the integrally connected form (as shown in FIG. 3), a notch-type water guide channel is provided on the surface of the sphere 103, and in addition to the approximate square type of the said water guide channel as described in the original case, under the above-said principle that the covering ratio of the notch-type water guide channel in the spheric surface determines the mixing ratio between the two (hot and cold) water inlets and further changes the water discharge volume of the two water inlets the said water guide channel maybe also in any other regular or irregular-type notch of channel such as an arcuate channel (as shown in FIG. 4) or a square (as shown in FIG. 4-1), or a rectangle (as shown in FIG. 4-2), or a round shape (as shown in FIG. 4-3), or a trapezoid (as shown in FIG. 4-4), or a T-shape (as shown in FIG. 4-5), its way to guide the water to the outlets also includes a larger notch-type water guide channel to directly guide the water flow (as the conventional type), and the gap formed by the tubular plug and between the sphere and the spheric socket seat to guide the water flow to the water outlets (as shown in FIG. 5), in the drawings, when the flow guide channel is communicative to the water inlets, the water flows out of the outlets via the water flow channel, then the part uncovered by the tubular plug and then the gap between the sphere and the spheric socket seat; when the flow guide channel is operated to get off from the water inlets, the spheric surface closely contacts the tubular plug to make the water flow in the water outlets completely blocked off, or further a water flow guide slot is provided in the integrally connected-type tubular plug to guide the water flow (as shown in FIG. 6), when the flow guide channel is communicative to the water inlets, the water flows to the water outlet via the flow guide channel and then the water flow guide slot in the flow guide channel is operated to get off from the water inlets, the spheric surface closely contacts the tubular plug, hereby making the water flow in the water inlets completely blocked off.

Shown in FIGS. 7, 7-1 and 7-2 are the above-said improved structure to be further applied to be improved design of the water outlets for the volume and temperature regulation and in the drawings:

-the spheric socket seat of the valve has two water outlets A and B, one in the front and the other in ther rear, and the two lopsided (larger in the upper part and smaller in the lower part) terraced hole-type water outlets, one in the left side and the other in the right side, and the said two water inlets and two water outlets are mutually in a slightly 4-angular cartesian coordinate symmetrical relationship;

-the integral-type tubular plug 102' is in a semi-spheric arcuate surface shape, on the bottom of which, two protruded tubular plugs with each having a through hole in the middle part respectively are provided to compress the coil spring and are also inserted into the respective two lopsided (larger in the upper part and smaller in the lower part) terrace-type water inlets, if observed horizontally over the position of the two protruding tubular plugs of the semi-spheric arcuate surface-type plug, a length way water guide slot U and V is provided at the position slightly toward the lower side and the upper side respectively is provided in the middle part of the said semi-spheric arcuate surface-type plug, both U and V are not mutually communicative or each of them has the separate flow guide hole as 102" shown in FIGS. 7 respectively;

-the sphere has two groups of the water guide channels X and Y in a regular or irregular slot shape such as an approximate square or rectangle, or arcuate form or trapezoid or T-shape, these two groups are not mutually communicative, and after combined one (X) of the two groups of the water guide channels couples the two water inlets and the water outlet A, while the other water guide channel Y couples the place between the two water inlets and the water outlet B.

The relationship between the concerned machineries of the above-said structure is that during the operating process, the handle bar positions and the functional state are described as follows:

(1) When the handle bar is placed at the middle position, the two water inlets are not communicative to the two groups of the water guide channels X and Y, i.e. now it is at a closed position, so the water flow cannot flow out therefrom;

(2) When the handle bar is pushed downward, the water guide channel X is gradually communicative to the water inlet coverage, hereby making the water flow through the lengthway water guide slot U and then out of the water outlet A, when the more the handle bar is pushed downward, the larger the covered area becomes the hot and cold water mixing ratio is changed by the proper adjustments on the covering ratio between the water guide channel X and the two water inlets through the retary movements, now another water guide channel Y moves more farther away from the two water inlets, and hereby there is no water flowing out of the water outlet Y;

(3) Similarly, when the handle bar is moved upward, the water guide channel Y is gradually communicative to the water inlet coverage, hereby making the water flow out of the water outlet B via the lengthway water guide Sb + V, and when the more the handle bar is pushed upward, the larger the covered area becomes, hereby making the flow become larger; the hot and cold water mixing ratio is changed by the proper adjustments on the covering ratio between the water guide channelY and the two water outlets through the rotary movements; now the other water guide channel X moves more further away from the two water inlets, hereby there is no water flowing out of the water outlet X.

Of the above-said various applicable examples, if the terrace-type holes of the two water inlets are made into lopsided (larger in the upper part and smaller in the lower part) inner expanded terrace-type holes which are then pressed into the arcuate spring by the spring and the tubular plug 102" which is larger than the upper end hole, and after pressed in, after also pressed therein, the tubular plug has a slightly protruding spheric surface which, at its proper height, closely sticks on the spheric surface of the sphere, and the water guide channel in the sphere is made into a flat smooth change shape, during the flow guide state, the concave form of the water guide channel makes the tubular plug become free drom the compression the tubular plug bounces up to the stable position of the above-said terrace-type hole without any further bounces upward, hereby forming the position-limiting tubular plug, thereby smoothly pressing the tubular plug into movement during the close-up operation, the applicable examples shown in FIGS. 8 and 8-1 are the examples of the designs to be used in the volume/temperature regulation; FIGS. 9, 9-1 and 9-2 show the examples of the designs to be used for the volume, temperature and outlet regulation.

Further, during the above-said rotary temperature regulation operations, to achieve the positions or reverse retary movements for properly adjusting the hot and cold water mixing ratio within the limitable rotary angular scopes, the water faucet as shown in FIGS. 1, 7, 8, and 9 has a rotary movement-limiting device, the feature of which lies in that the shape of the cross section of its rotary handle bar is in an approximate diamond, whereas its sideway width is slightly smaller than the sideway width of the limiting channel in the valve cover that the rotary movement-limiting device passes through while its lengthway length is larger than the sideway width of the limiting channel, hereby making the handle bar only limit the positive or reverse reciprocating rotary movements within the said angle but not conduct the continuous rotary movements. The feature of its structure lies in that the valve cover is provided with a lengthway elongated slot for the sphere-operating handle bar to slide up and down, the relationship between the said lengthway slot and the handle bar is that:

-The handle bar is a cross section slightly in a diamond, its narrower diagonal distance is its width, and its longer diagonal distance is its length;

-The width of the lengthway elongated slot provided in the valve cover is slightly larger than the width of the handle bar but smaller than the length of the handle bar.

The structure of the handle bar with its length larger than the width of the said slot limits the angle of the positive and reverse operations of the handle bar during the operation (as shown in FIG. 10).

Summing all the above up, the added and continued improvement case in this case has improved the limiting design of the leakage-proof and operating scope for the original case, thereby making the applicable examples of the original case become more complete.

**Claims**

1) An improved structure of the water faucet whose sphere having a water guide channel couples the water inlet/outlet in the valve body having a spheric socket to change the water volume and the water mixing ratio comprising:

-a tubular water-proof plug made of a flexible material (such as rubber, plastic or soft metal), the bottom of which presses an annular spring that is placed into the hot and cold water inlet hole as a terraced hole with a larger outer part and a smaller inner part, and its top can closely stick the surface of the sphere and also couples the water guide channel in the sphere;

-the channel in the surface of the sphere, whereas under the principle that the notch made on the surface of the sphere remains unchanged, this channel can be in a regular notch with different widths or slot with changes in its design.

2) The shape of the two groups of the tubular waterproof plug defined in the claim 1) in a separate or an integrally connected configuration, the feature of which lies in that during operations, the said plugs can tightly stick to the spheric surface required to be covered without any hindrance against the relative slide movements of the notches.

3) The integrally connected tubular plug defined in the above claim 2), on which a flow guide slot is provided to direct the water flow accordingly, when the flow guide channel is communicative to the water inlet, the water flows to the water outlet via the flow guide channel and the flow guide slot in the tubular plug; when the flow guide channel is operated to get off the water inlet, the spheric surface and the tubular plug are in a close contact, thereby making the water flow in the water inlet entirely blocked off.

4) The water guide channel in various shapes defined in the claim 1) comprising its left and right lengths couple the respective two water inlets and its front and rear lengths direct straddle between the two water inlets and the water guide channel, or the said water guide channel is in a narrower sideway channel, and a gap between the sphere formed by the elastic plug and the spheric socket of the outer shell guides the water flow to the water outlet.

5) The water faucet defined in the claim 1), wherein its further improvement is also the improved design applied to the two water outlets, the features of which cover:

-The spheric socket of the valve has two water outlets A and B, one in the front and the other in the rear, and two terraced hole-type (larger in the upper part and smaller in the lower part) water outlets A and B, one in the left and the other in the left, the said two water inlets and outlets are mutually in a slightly 4-angular cartesign coordinate symmetrical relationship;

-an integral tubular plug in a semi-spheric arcuate surface, the bottom of which has two protruding tubular plugs each with a through hole in its middle part respectively to press against the annular spring, and the said two protruding tubular plugs are respectively inserted in the two water inlets each with a terraced (larger in the upper part and smaller in the lower part), hole respectively, if observed horizontally over the positions of the two protruding tubular plugs of the semi-spheric arcuate plug; lengthway water guide slots U and V are provided in the slightly down-ward position and also in the slightly upward position in the middle part, and are respectively communicative to the water outlets A and B, but the lengthway water guide slots U and V are not mutually communicative; or they have their own separate flow guide hole structure;

-the sphere having two groups of the regular or irregular slot-type water guide channels X and $\underline{Y}$ in an approximate square, rectangle, or arc, or trapezoid, or T-shape, the said two groups of slot-type water guide channels X and $\underline{Y}$ are mutually not communicative, after assembled, one (X) of the said two water guide group $\underline{Y}$ couples at the place between the two water inlets and the water outlet B.

(6) The water faucet defined in the claims 1) and 5), the further improvement of which is that the terraced holes of the two water inlets are made into internally enlarged type terraced hole in a smaller upper part, a larger middle part and a smaller lower part, a spring and a tubular plug larger than the top end hole press the annular spring into the said terraced hole, after pressed therein, the tubular plug forms a slightly protruding closely sticks the spheric surface of the sphere, the water guide channel in the sphere is made into a flat smooth change form, during the flow guide state, the concave shape of the water guide channel makes the tubular plug become free from the compression, the tubular plug bounces upward to the stable position of the above-said terraced holes without any farther upward bounces, thereby forming the position-limiting tubular plug to smoothly press the tubular plug into movements during the close-up operations.

7) The improved design of the water faucet defined in the claims 1), 5), and 6), the further features of which lie in that the valve cover is provided with a lengthway elongated channel for the sphere-operating handle bar to slide up and down thereon, the relationship between the lengthway elongated channel and the handle bar is that:

-The handle bar is in a slightly diamond-type cross section, its narrower diagonal distance is its width and its longer diagonal distance is its length;

-the width of the lengthway elongated channel provided in the valve cover is slightly larger than the width of the handle bar but smaller than the length of the handle bar.

The structure of the handle bar with its length larger than the width of the channel limits the positive and reverse operating angle of the handle bar during the operations.

Fig. 1

Fig. 1-1

Fig. 1-2

Fig. 2

Fig. 3

Fig. 4

Fig. 4-3

Fig. 4-1

Fig. 4-4

Fig. 4-2

Fig. 4-5

Fig. 5

Fig. 6

Fig. 7

Fig. 7-1

Fig. 7-2

205

204

203

206

201

103

101

102'''

Fig. 8

202

102'''

100

Fig. 8-1

Fig. 8-2

Fig. 9

Fig. 9-1

Fig. 9-2

Fig. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 000 739 (BRANDELLI)  * Page 4, lines 13-34; page 8, line 16 - page 9, line 8; figures 2,7,10,11 * | 1,2,4, 7 | F 16 K 11/087 |
| X | FR-A-1 479 642 (MASCO)  * Page 2, left-hand column, paragraph 7 - page 3, left-hand column, paragraph 1; figures 2,3,5,7; page 1, right-hand column, paragraph 3 * | 1,2,4 | |
| A | | 7 | |
| X | US-A-3 915 195 (MASCO)  * Column 2, line 49 - column 3, line 29; figures * | 1,2,4 | TECHNICAL FIELDS SEARCHED (Int. Cl.4) |
| X | FR-A-2 241 031 (MASCO)  * Page 7, line 20 - page 8, line 10; figures 9-11 * | 1,2,4 | F 16 K |
| A | EP-A-0 055 506 (S.A. YOUNG CO.)  * Page 4, line 12 - page 7, line 14 * | 1-5 | |
| A | FR-A-2 136 021 (SAFFIN)  * Page 2, lines 13-20; figures * | 1,5 | |

--- -/-

The present search report has been drawn up for all claims

| Place of search | Date of completion of the search | Examiner |
|---|---|---|
| THE HAGUE | 14-02-1986 | LEMERCIER D.L.L. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-3 130 750 (POST)<br>* Column 2, lines 28-67; figures * | 1,5 | |
| A | DE-A-1 918 622 (HAYMAN)<br>* Page 5, paragraph 1; figures * | 1,2,6 | |

TECHNICAL FIELDS SEARCHED (Int. Cl.4)

The present search report has been drawn up for all claims

| Place of search | Date of completion of the search | Examiner |
|---|---|---|
| THE HAGUE | 14-02-1986 | LEMERCIER D.L.L. |